# EUROPEAN PATENT SPECIFICATION

(11) **EP 2 142 835 B1**
(45) Date of publication and mention of the grant of the patent: **10.08.2011**
(21) Application number: 08737023.5
(22) Date of filing: 18.04.2008
(51) Int. Cl.: F16L 13/00, F16L 47/20, F16L 47/24

(54) **CONNECTOR**
VERBINDER
RACCORD

(30) Priority: 18.04.2007 GB 0707438
(43) Date of publication of application: 13.01.2010
(73) Proprietor: Design Technology and Innovation Ltd, Croydon CR0 0YN (GB)
(72) Inventor: TONKIN, Mark, Christopher, East Sussex BN8 6AP (GB); WATSON, Rebecca, Brighton BN3 6LH (GB)
(74) Representative: Samuels, Adrian James
(86) International application number: PCT/GB2008/001363
(87) International publication number: WO 2008/129261

(56) References cited:
- WO-A-02/061322
- WO-A-2004/099659
- DE-U1- 20 215 035
- DE-U1-202005 014 011
- DE-U1-202007 011 453
- FR-A- 2 655 126
- JP-A- 2004 332 895
- US-A- 4 819 969
- US-B1- 6 441 306

## Description

### Field of the Invention

This invention relates to a connector for connection to a pipe. It also relates to a connection system comprising a connector and pipe and to a method of connection using the same. A particular application of the invention is a connector for connection to a pipe made from an expandable material that expands into a cavity of the connector in use.

### Background to the Invention

Perhaps the simplest form of pipe connector is a sleeve for connecting two pipes together. The sleeve may fit around an end of each pipe and be sealed in position to effectively make the two pipes one. This is often seen in domestic plumbing, where the sleeve is usually made from copper and soldered onto copper pipes.

More complex connectors tend to rely on some kind of compression fit. For example, a sleeve may be fitted onto the end of a pipe that squeezes around the outside of the pipe to form a seal. Often, a sealing component, such as an o-ring seal or an olive, is provided between the pipe and the sleeve. This type of seal is used in some more modern domestic plumbing systems and is often referred to as a "press-fit" or "push-fit" connector.

Of course, connectors that rely primarily on forcing a sleeve against the outside of a pipe are only suitable for stiff pipes that can withstand being squeezed from the outside sufficiently to allow a seal to be formed between the pipe and the sleeve. More flexible pipes, such as garden hoses, cannot withstand such squeezing and require different connectors. Typically, these connectors have a hollow spigot or such like that fits inside the end of the pipe as well as a sleeve that fits around the outside of a pipe. The spigot and sleeve are usually arranged to form a seal by compressing the wall of the pipe between them. In other words, the spigot helps the pipe to withstand being squeezed, such that a seal can be formed between the pipe and the connector.

3n document DE202007011453U1, a connection is shown where in a pipe comprises a layer of swellable material, that expands during drying.

It can be appreciated that all connectors that use compression to form a seal, whether applied to a stiff pipe by just a sleeve or to a flexible pipe between a sleeve and a spigot, are reliant on the pipe being made from a material that has appropriate strength and resistance to being compressed. However, not all pipes are made from materials having suitable properties. Furthermore, it is not always desirable to put pipes under stress by compressing them, as this can degrade the material from which they are made and weaken the pipe. Certain types of pipe may also inherently shrink and expand under environmental conditions. In particular, if a compression type connector is fitted to a pipe that subsequently expands, the stress the connector applies to the pipe will increase, which may lead to the seal between the connector and pipe breaking or the pipe distorting. These connectors also tend to have multiple components, which can make them prone to break or wear out and adds to manufacturing complexity.

The present invention seeks to overcome these problems.

### Summary of the invention

According to the present invention there is provided a connection system comprising a pipe and a connector for connection to the pipe, wherein the connector has a cavity for receiving an end of the pipe, the cavity having a width that varies between a minimum that is the same as or less than the outer dimensions of the pipe so as to hold the pipe inside the connector and a maximum that is more than the outer dimensions of the pipe so that the pipe can expand inside the cavity, wherein the pipe comprises a material that expands on hydration.

So, the invention allows the pipe to expand inside the connector. Typically, the pipe, in its unexpanded state, is held inside the connector by friction between the pipe and cavity at its minimum width sufficiently that fluid can flow through the pipe and connector without the pipe being expelled from the cavity. The pipe can then expand toward the maximum width of the cavity as it becomes hydrated by the fluid, so that it fits more tightly in the cavity. Expansion of the pipe may therefore create or improve a seal between the pipe and the connector.

The main advantage of the invention is that it allows a connection to be made with a pipe made from a material that expands significantly in use, e.g. with changes in environmental conditions, without too much stress being applied to the pipe, particularly when it is in its expanded state. It can also allow the connector to be fitted to the pipe very easily whist the pipe is in its unexpanded state, but a strong and reliable connection to be obtained as the pipe expands. The connection system is therefore very easy and convenient to use.

It can also be appreciated that the connector need not have any moving parts. This can make it simple to use and avoid the need for tools during fitting and removal. It also means that the connector can be robust, have a long working lifetime and be capable of being fitted and removed a large number of times. The connector can also be made as a single piece. This makes it relatively simple and cheap to manufacture in comparison to the prior art.

Usually, the pipe is a tube, hose or such like, although it might be the outlet of a tank or such like in some examples. Typically, the pipe is cylindrical. So, the cavity is also usually cylindrical, so as to fit the pipe appropriately. The maximum and minimum widths might therefore be maximum or minimum diameters respectively. Likewise, the outer width of the pipe referred to above may be the outer diameter of the pipe, e.g. the diameter of its outside surface.

The variation in width or diameter of the cavity can be provided in almost limitless ways. For example, the width of the cavity may vary by the inner surface of the cavity having one or more recesses or protrusions. These might be arranged at discrete locations on the inner surface of the cavity, e.g. around the circumference of the cavity. Alternatively, they might be substantially annular. However, in a particularly preferred example, the width of the cavity varies by the inner surface of the cavity undulating along its length. This undulation might be regular or irregular. It is preferred that the undulation of the inner surface comprises corrugation. Corrugating the pipe can be advantageous, as it can allow variation in the length of the pipe as it expands and contracts to be accommodated without the pipe bending or kinking. So, corrugating the inner surface of the cavity can allow it to fit better with a corrugated pipe.

In one example, the inner surface of the cavity is corrugated with wider ridges than grooves. This means that, when the ridges of the pipe are corrugated similarly to the inner surface of the cavity, e.g. with the same pitch, as the pipe expands inside the cavity, its ridges are squeezed across their width as they expand into the grooves of the inner surface of the cavity. This can improve the fit of the pipe in the cavity and, in particular, the seal between the pipe and the connector.

Similarly, in another example, the inner surface is corrugated with grooves that have a widening towards their base. This means that, when the ridges of the pipe that are corrugated similarly to the inner surface of the cavity, e.g. with the same pitch, as the pipe expands inside the cavity, its ridges can expand into the widening of the grooves. This has the effect of locking the ridges of the pipe in to the grooves of the inner surface of the cavity. Again, this can improve the fit of the pipe in the cavity and, in particular, the seal between the pipe and the connector. It can also strengthen the connection of the pipe to the connector, making it harder for the pipe to be accidentally pulled out of the connector.

In another example, the undulation of the inner surface may comprise a thread instead of corrugation. This can assist with insertion of the pipe into the connector. For the same reasons as set out above, the thread may have a wider ridge than groove. Likewise, the thread may have a groove with a widening towards its base. Furthermore, the thread may undulate along its length, e.g. have recesses into which the pipe can expand in use. This can cause the pipe to become locked in the thread in its expanded state.

The groove or grooves of the corrugation/thread preferably has/have variable depth. More specifically, one or more grooves of the corrugation may have a reduced diameter in comparison to the other groove or grooves. Similarly, a length of the thread, typically extending for at least one circumference of the cavity, may have a reduced diameter in comparison to other part of the thread. The variable depth allows the extent to which the pipe is held in the cavity when it is in its dehydrated state, or the extent to which the pipe is allowed to expand to vary over the length of the cavity. For example, a part of the pipe, typically one or more ridges, that is aligned with the reduced diameter groove or grooves can be arranged to be squeezed by the reduced diameter groove or grooves by the reduced diameter being less than the maximum diameter of the pipe. This can improve the seal formed when the pipe is first inserted into the cavity.

Usually, the pipe comprises an expandable material that can expand into the maximum diameter of the cavity. The pipe comprises a material that expands on hydration. In a particularly preferred example, this material is Dutyion^{™}.

Naturally, the sizes of the cavity and pipe, and specifically their widths, are usually arranged to suit one another. Typically, the outer width of the pipe is between around 10 mm and around 35 mm. So, the minimum width of the cavity is also usually between around 10 mm and around 35 mm. In general, materials from which the pipe is made may expand by around 5% to around 35%. In particular, the Dutyion^{™} material from which the pipe may be made expands by around 10% to around 15% on hydration. The maximum width of the cavity may therefore be around 5% to around 35% greater, and preferably around 10% to around 15% greater, than the outer width of the pipe in its unexpanded state. This is effectively the same as saying that the maximum width of the cavity is around 5% to around 35% greater, and preferably around 10% to around 15% greater, than the minimum width of the cavity, ignoring that the minimum width of the cavity may be a little less than the outer width of the pipe.

The connector may be adapted to perform various different connection functions. Typically, it allows fluid to flow to and/or from the pipe. To this end, the cavity preferably defines a first opening through which the pipe is received in the cavity and the connector has a second opening positioned so that it is fluid communication with the end of the pipe when the pipe is received in the cavity. Fluid may flow through this second opening to another pipe. So, the connector might comprise means for connecting to another pipe to form a conduit between the pipes. Alternatively, it might comprise means for connecting to one or more other pipes to form a junction between the pipes. However, it will be appreciated that the connector is not limited to this and it might just connect the pipe to a solid wall or blank, so as to seal the end of the pipe.

Preferred embodiments of the invention are now described, by way of example only, with reference to the accompanying drawings.

### Brief Description of the Drawings

Figure 1 is a lengthwise part-sectional illustration of a connection system according to a first preferred embodiment of the present invention with its connector and pipe disconnected;
Figure 2 is a lengthwise part-sectional illustration of the connection system of Figure 1 with the connector and pipe connected;
Figure 3 is a lengthwise part-sectional illustration of a connection system according to a second preferred embodiment of the present invention;
Figure 4 is a lengthwise sectional illustration of a side wall of a connector and a side wall of a pipe of a connection system according to a third preferred embodiment of the present invention;
Figure 5 is a lengthwise sectional illustration of a connector showing variations to the connectors of the first to third preferred embodiments of the present invention;
Figure 6 is a lengthwise part-sectional illustration of a connection system according to a fourth preferred embodiment of the present invention; and
Figure 7 is a lengthwise part-sectional illustration of a connection system according to a fifth preferred embodiment of the present invention.

### Detailed Description of the Preferred Embodiments

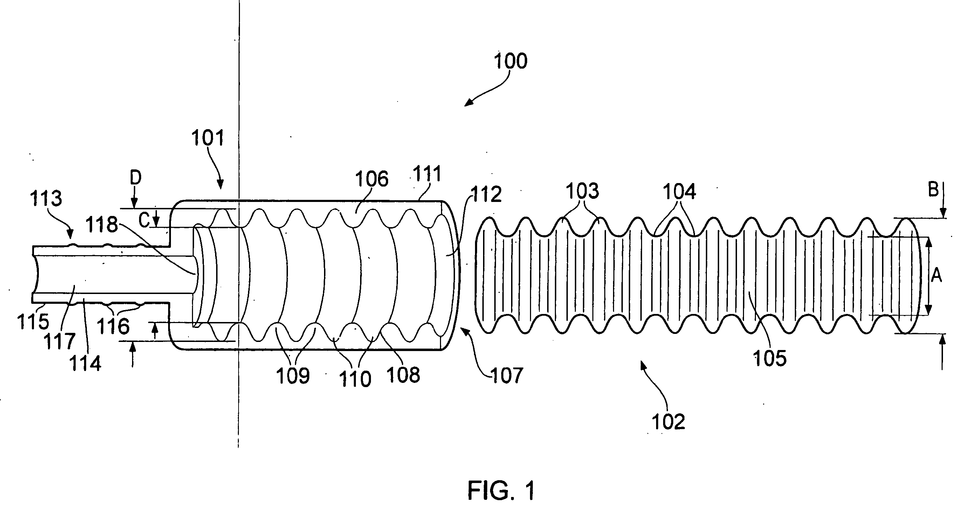

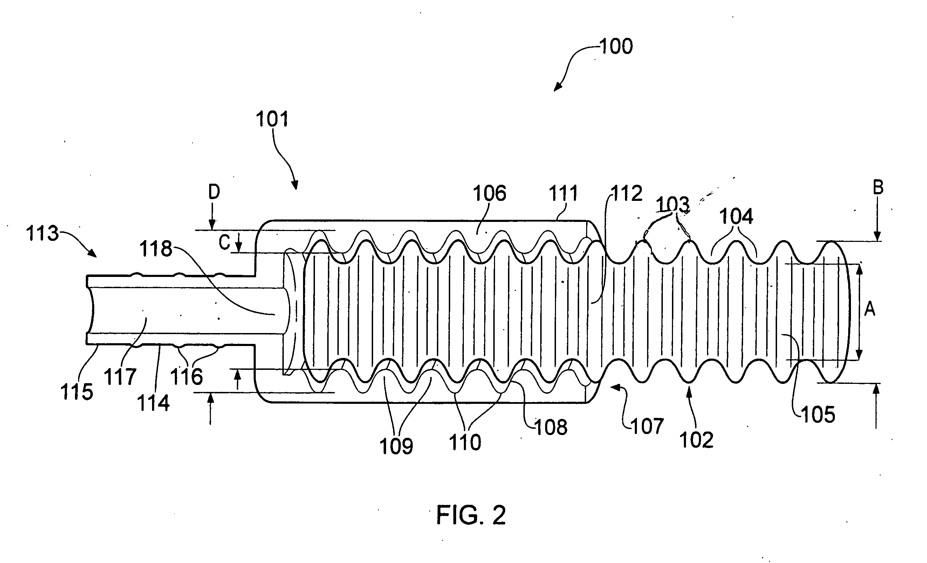

Referring to Figures 1 and 2, a connection system 100 according to a first preferred embodiment of the present invention comprises a connector 101 and a pipe 102. Figure 1 shows the connector 101 and pipe 102 disconnected and Figure 2 shows the connector 101 and pipe 102 connected.

The pipe 101 is made from a hydrophilic membrane capable of pervaporating brackish water or such like as substantially pure water, e.g. by phase change permeation. In more detail, the pipe 102 is made from a hydrophilic polymer, selected from a copolyetherester elastomer, a polyether-block-polymide, a polyether urethane, a homopolymer of polyvinyl alcohol, a copolymer of polyvinyl alcohol and mixtures thereof. More specifically, this material may be a mixture of two or more copolyetherester elastomers having a multiplicity of recurring long-chain ester units and short-chain ester units joined head-to-tail through ester linkages, where the long-chain ester units are represented by the formula: 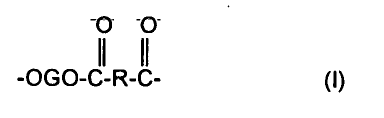 and said short-chain ester units being represented by the formula: 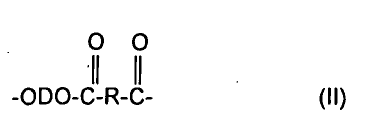 wherein: G is a divalent radical remaining after the removal of terminal hydroxyl groups from a poly(alkylene oxide)glycol having a number average molecular weight of about 400 to about 4000; R is a divalent radical remaining after removal of carboxyl groups from a dicarboxylic acid having a molecular weight less than about 300; D is a divalent radical remaining after the removal of hydroxyl groups from a diol having a molecular weight less than about 250; the copolyetherester contains between about 0 to about 68 weight percent based on the total weight of the copolyetherester, ethylene oxide groups incorporated in the long-chain ester units of the copolyetherester; and the copolyetherester contains about between about 25 to about 80 weight percent short-chain ester units. Usually, the poly(alkylene oxide)glycol is poly(ethylene oxide)glycol. Likewise, the copolyetherester usually contains between about 40 to about 60 weight percent short-chain ester units. This is known as Dutyion^{™}. One feature of this material is that it expands significantly as it hydrates. Indeed, its dimensions increase by around 10% to 15% between its dehydrated and hydrated states.

The pipe 102 is generally cylindrical, but it is corrugated along its length, in this embodiment with roughly regular ridges 103 and grooves 104, such that it varies in diameter between a minimum diameter A and a maximum diameter B. The corrugation is provided on the inside and outside of the pipe 102 such that the side wall 105 of the pipe 102 has substantially uniform thickness. The corrugation helps to prevent the overall length of the pipe 102 changing as the pipe 102 expands and contracts.

The connector 101 has a side wall 106 defining a substantially cylindrical cavity 107. The inside surface 108 of the cavity 107 is corrugated in the similar way to the pipe 102. More specifically, the inside surface 108 of the cavity 107 is corrugated with roughly regular ridges 109 and grooves 110. However, unlike the pipe 102, the grooves 110 of the inside surface 108 of the cavity 107 are narrower than the ridges 109, although the pitch of the corrugation is the same. The corrugation of the inside surface 108 of the cavity 107 means that the cavity 107 varies in diameter between a minimum diameter C and a maximum diameter D. The outer surface 111 of the connector 101 around the cavity 107 is also substantially cylindrical and, in this embodiment, is substantially smooth. The part of the connector 101 forming the cavity 107 is therefore substantially tubular.

The cavity 107 has an outer opening 112 at one end of the connector 101 to receive the pipe 102. At the other end of the connector 101 there is a fitting 113 for receiving another pipe (not shown), such as a garden hose. In this embodiment, the fitting 113 comprises a tube 114 that fits inside the other pipe. The outside surface 114 of the tube 113 is raised at ring like projections 116 along its length that can grip the inside surface of the other pipe. The inside of the tube 114 defines a passage 117 that extends from the end of the connector 101 at which the fitting 113 is located to an inner opening 118 into the cavity 107. This means that water can pass from the pipe 102, when inserted in the cavity 107, to the inner opening 118, through the fluid passage 116 and into the other pipe.

It can be appreciated from the drawings that, in this embodiment, the connector 101 is basically a tube with inner and outer diameters that vary to provide the various desired features. This makes the connector 101 relatively simple, and hence cheap, to manufacture, e.g. by injection molding or such like.

The pipe 102 is illustrated in Figures 1 and 2 in a dehydrated state and it can be seen from the drawings that the cavity 107 of the connector 101 has a maximum diameter D greater than the maximum diameter B of the pipe 102 and a minimum diameter C less than the maximum diameter B of the pipe 102, when the pipe 102 is in this dehydrated state. In use, the pipe 102 is usually inserted into the cavity 107 of the connector 101 when the pipe 102 is in its dehydrated state. When the pipe 102 is dehydrated, the relative dimensions of the pipe 102 and cavity 107 allow the pipe 102 to be easily inserted into the cavity 107. Nonetheless, as the minimum diameter C of the cavity 107 is less than the maximum diameter B of the pipe 102, a seal is formed between the pipe 102 and the cavity 107. More specifically, the seal is formed by the corrugations of the pipe 102 and cavity 107 being offset from one another such that the ridges 109 of the cavity 107 are in contact with the ridges 103 of the pipe 102 on just one side of the ridges 103, 109, as shown in Figure 2. In this embodiment, the pipe 102 must also be approximately concentric with the cavity 107, again as shown in Figure 2, so that the ridges 103, 109 overlap with one another radially. When water flows through the connection system 100, the connector 101 and pipe 102 (in its dehydrated state) tend to move toward this position by the pressure trying to force the pipe 102 out of the cavity 107. In more detail, as the water tries to move the pipe 102 longitudinally toward the opening of the cavity 107 at the end of the connector 101, the ridges 103 of the outer surface of the pipe 102 come into contact with the ridges 109 of the inside surface 108 of the cavity 107. The ridges act as cams to move the pipe 102 concentric with the cavity 107. So, the ridges 103 of the pipe 102 and the ridges 109 of the cavity 107 form a seal. However, as the maximum diameter D of the cavity 107 is more than the maximum diameter B of the pipe 102, the pipe 102 can still move around inside the cavity 107. This means that the seal formed by the ridges 103, 109 is relatively weak and unstable.

As mentioned above, the Dutyion^{™} material from which the pipe 102 is made expands on hydration. This means that, when the pipe 102 carries water and absorbs some of it to hydrate, the pipe 102 expands. As the pipe 102 expands, its diameter increases. This means that the ridges 103 of the pipe 102 expand into the grooves 110 of the cavity 107, the pipe 102 fits more tightly into the cavity 107 and the seal between the pipe 102 and the cavity 107 is improved. Indeed, Dutyion^{™} expands by around 10% to 15% on hydration. For this reason, in this embodiment, the maximum diameter D of the cavity 107 is just a little less than around 10% to 15% greater than the outer diameter B of the pipe 102 in its dehydrated state. In other words, the maximum diameter D of the cavity 107 is just a little less than around 10% to 15% greater than the minimum diameter C of the cavity 107. This allows the pipe 102 to just about fully expand inside the cavity 107 on hydration. Not only does this improve the seal, allowing the pipe 102 to expand prevents it from kinking or otherwise distorting on expansion with hydration inside the connector 101. So, the expansion properties of the pipe 102 are exploited to allow easy insertion of the dehydrated pipe into the connector 101 yet provide the tight seal between the pipe 102 and connector once the pipe 102 is hydrated. In addition, any problems associated with the pipe 102 expanding and contracting once inside the connector 101 are minimised.

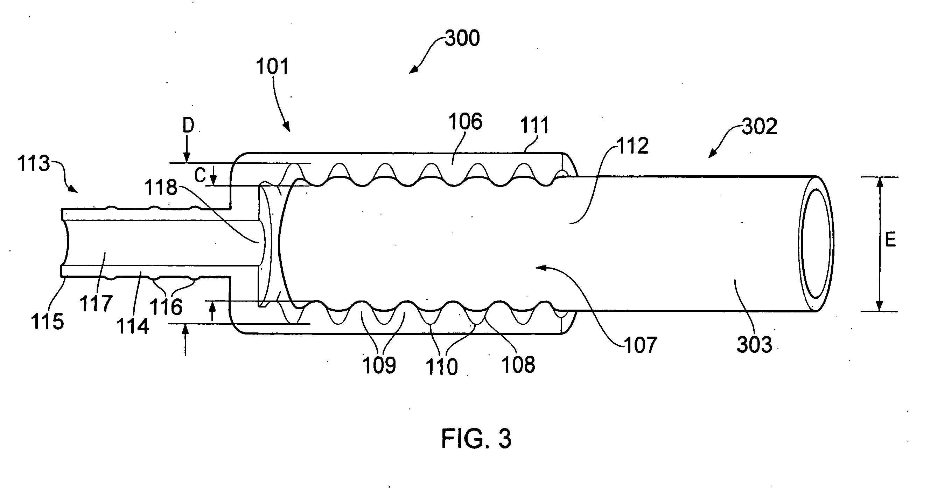

Referring to Figure 3, a connection system 300 according to a second preferred embodiment of the present invention is similar to the connection system 100 according to the first preferred embodiment of the invention and the same reference numerals are used for similar components. In particular, it can be seen that the connection system 300 according to the second preferred embodiment has a connector 101 identical to that of the first preferred embodiment. However, in the second preferred embodiment, the connector 101 connects to a pipe 302 that has a smooth outer surface 303, e.g. having a constant diameter E in its dehydrated state. The diameter E of the outer surface 303 of the pipe 302 in its dehydrated state is approximately the same as the maximum diameter B of the pipe 102 of the first embodiment. In other words, the maximum diameter D of the cavity 107 of the connector 101 is greater than the diameter E of the pipe 302 and the minimum diameter C of the cavity 107 is less than the diameter E of the pipe 302. This means that the pipe 302, in its dehydrated state, can be easily inserted into the cavity 107 and a seal formed between the pipe 302 and the cavity at its minimum diameter C, e.g. the peaks 109. Furthermore, when the pipe 302 hydrates, it can expand into the maximum diameter D of the cavity 107, e.g. the troughs 110.

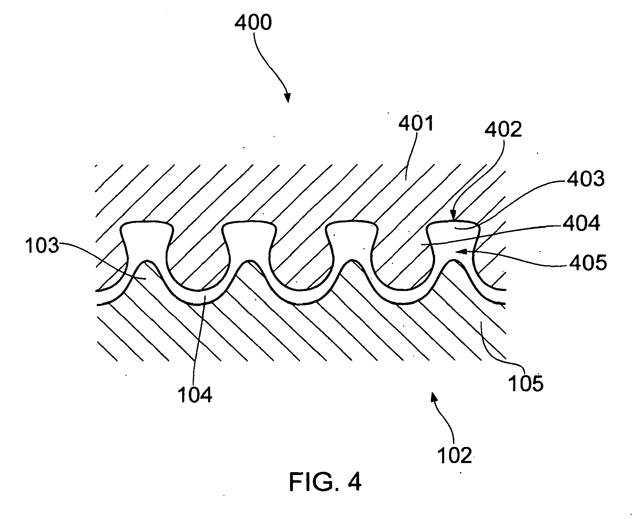

Referring to Figure 4, a connection system 400 according to a third preferred embodiment of the present invention is similar to the connection system 100 of the first preferred embodiment of the invention and the same reference numerals are used for similar components. However, in the third embodiment, the cavity 107 of a modified connector 401 has an inner surface 402 corrugated with grooves 403 that have a widening towards their base. This means that the pair of ridges 404 on either side of each groove 403 form a narrowing or neck 405 toward the opening of each ridge 404. As the pipe 102 expands on hydration, its ridges 103 expand into the grooves 403 of the connector 401. In particular, they expand into the widened part of the grooves 403. This has the effect of locking the ridges 103 of the pipe 102 in the grooves 403 of the connector 301, strengthening the connection between pipe 102 and connector 401.

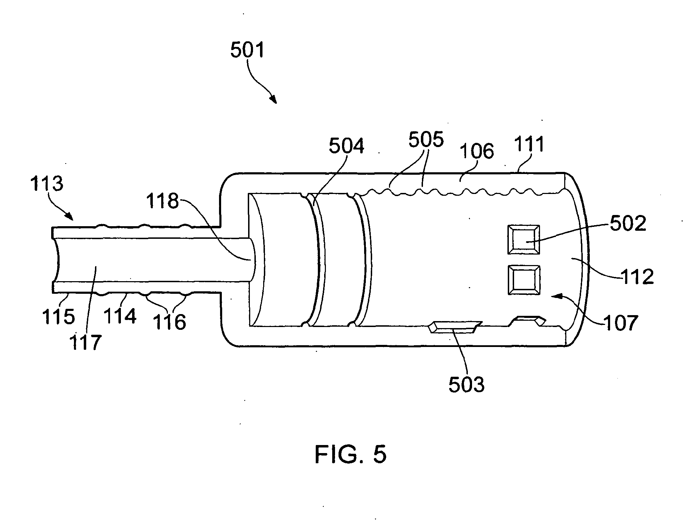

The connector 101 of the first embodiment can be also be modified in a variety of other ways and a connector 501 illustrating some of these modifications is shown in Figure 5. Again, the same reference numerals are used for similar components. The cavity 107 of the connector 501 does not have a corrugated inside surface 108. Rather, the surface 108 has a generally constant diameter or a significant majority of the surface 108 has one diameter or level. The variation in the diameter of the inside surface 108 of the cavity 107 is provided in a variety of other ways, e.g. by a number of features being provided on the surface 108. One such feature is a ridge or ridges 504. The ridges 504 extend around the circumference of the cavity 107, e.g. are circumferential. Another feature is a protrusion or protrusions 502. These are illustrated as square in Figure 5, but can have virtually any shape. In the illustrated example, they define a second surface at a reduced diameter of the cavity 107 or raise the level of the surface 108. Other features are more complex corrugation 505, such as a W shaped corrugation or a corrugation that varies in shape or depth with a period greater than one ridge and trough; and recesses 503 that define a second surface at an increased diameter of the cavity 107 or lower the level of the surface 108.

These features can be used alone or in combination with each other or other components of the other preferred embodiments to retain the corrugated pipe 102 or smooth pipe 302 in the connector 501. The ridges 504 and protrusions 502 tend to grip the pipe 102, 302 and retain it in position in its dehydrated state. The corrugation and recesses 503 tend to accommodate expansion of the pipe 102, 302. However, this of course depends on the general diameter of the cavity 107, e.g. the diameter at the majority of the inside surface 108.

In some embodiments, the general diameter of the cavity 107 is greater than the maximum diameter B of the corrugated pipe 102 or the diameter E of the smooth pipe 302. The ridges 504 or protrusions 502 are then important for gripping the pipe 102, 302, but expansion of the pipe 102, 302 can be accommodated with or without the corrugation or recesses 503. In other embodiments, the general diameter of the cavity 107 is the same as or less than the maximum diameter B of the corrugated pipe 102 or the diameter E of the smooth pipe 302. The pipe 102, 302 can then be retained in the cavity 107 in its dehydrated state with or without the presence of the ridges 504 or protrusions 502. However, the corrugation or recesses 503 are important for accommodating expansion of the pipe 102, 302

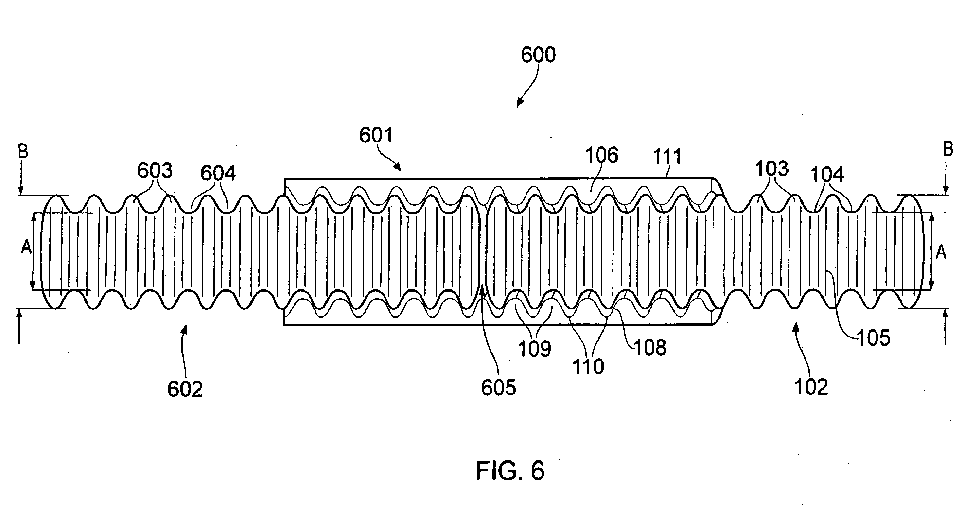

Referring to Figure 6, a connection system 600 according to a fourth preferred embodiment of the present invention is similar to the connection system of the first preferred embodiment of the invention and the same reference numerals are used for similar components. However, the connection system 600 illustrated in Figure 6 comprises a connector 601 that connects the pipe 102 of the first preferred embodiment to another identical pipe 602, corrugated with identical ridges 603 and troughs 604. So, the connector 601 does not have a fitting 112 for connection to a garden hose or such like. Rather, it has a cavity 605 that extends all the way through the connector 601.

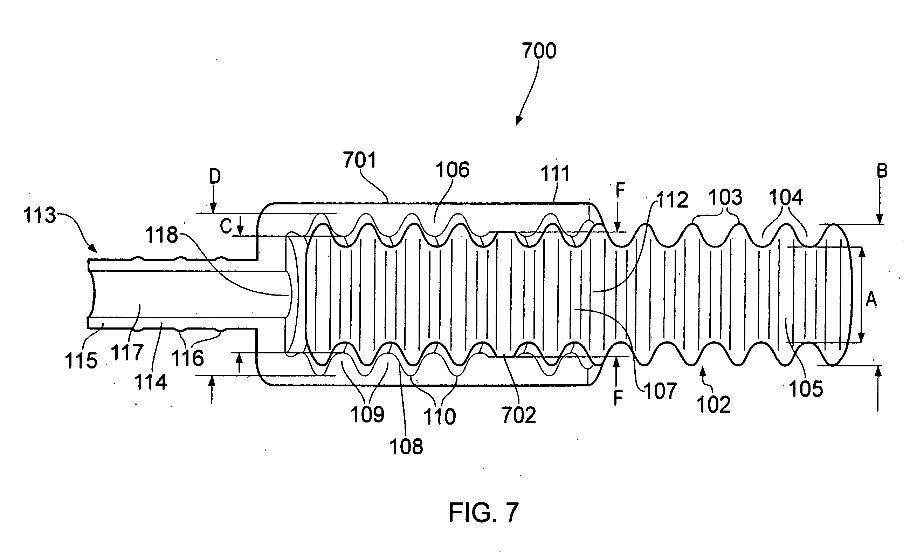

Referring to Figure 7, a connection system 700 according to a fifth preferred embodiment of the present invention is similar to the connection system 100 according to the first preferred embodiment of the invention and the same reference numerals are used for similar components. In particular, it can be seen that the connection system 700 according to the second preferred embodiment has a pipe 102 identical to that of the first preferred embodiment. However, in the fifth preferred embodiment, the connector 701 has a groove 702 of reduced diameter F in comparison to the other grooves 110 of the connector 701. In the illustrated embodiment, there is only a single reduced diameter groove 702, although there may alternatively be more than one. When there is more than one reduced diameter groove 7082, they are preferably adjacent to one another. Also in the illustrated embodiment, the reduced diameter F is (slightly) greater than the minimum diameter C of the cavity 107, although in other embodiments it may be the same as the minimum diameter C of the cavity. In any event, the reduced diameter F of the reduced diameter groove 702 is less than the maximum diameter B of pipe 102 when it is in its dehydrated state.

The purpose of the reduced diameter groove 702 is that it can cooperate with one of the ridges 103 of the pipe 102 to provide an improved seal when the pipe 102 is in its dehydrated state, e.g. when it is first inserted into the cavity 107. In more detail, when the pipe 102 is inserted in the cavity 107, one of the ridges 103 of the pipe 102 becomes aligned with the reduced diameter groove 702. This ridge 103 is squeezed by the reduced diameter groove 702 when the pipe 102 is in its dehydrated state due to the reduced diameter F of the groove 702. So, a water tight seal, improved in comparison to that of the first preferred embodiment of the invention, may be formed when the pipe is first inserted into the cavity 107.

The described embodiments of the invention are only examples of how the invention may be implemented. Modifications, variations and changes to the described embodiments will occur to those having appropriate skills and knowledge. For example, the corrugation shown in any of the embodiments may instead be a thread having a continuous trough and ridge. Furthermore, components illustrated in different embodiments may be interchanged with one another as appropriate. All such combinations are considered part of the description of the preferred embodiments

## Claims

1. A connection system (100, 300, 400, 600, 700) comprising a pipe (102, 302) and a connector (101, 401, 501, 601, 701) for connection to the pipe (102, 302), wherein the connector (101, 401, 501, 601, 701) has a cavity (107, 605) for receiving an end of the pipe (102, 302), the cavity (107, 605) having a width that varies between a minimum (C) that is the same or less than the outer width (B, E) of the pipe (102, 302) so as to hold the pipe (102, 302) inside the cavity (107, 605) and a maximum (D) that is more than the outer width (B, E) of the pipe (102, 302) so that the pipe (102, 302) can expand inside the cavity (107, 605) , **characterized in that** the pipe (102, 302) comprises a material that expands on hydration.

2. The connection system (100, 300, 400, 600, 700) of claim 1, wherein the cavity (107, 605) is substantially cylindrical.

3. The connection system (100, 300, 400, 600, 700) of claim 1 or claim 2, wherein the width of the cavity (107, 605) varies by the inner surface (108, 402) of the cavity (107, 605) having one or more recesses (110, 403, 503, 604, 702) or protrusions (109, 404, 502, 504, 603).

4. The connection system (100, 300, 400, 600, 700) of claim 1 or claim 2, wherein the width of the cavity (107, 605) varies by the inner surface (108, 402) of the cavity (107, 605) undulating along its length.

5. The connection system (100, 300, 400, 600, 700) of claim 4, wherein the undulation of the inner surface (108, 402) comprises corrugation.

6. The connection system (100, 300, 400, 600, 700) of claim 5, wherein the inner surface (108, 402) is corrugated with wider ridges than grooves.

7. The connection system (100, 300, 400, 600, 700) of claim 4 or claim 5, wherein the inner surface (108, 402) is corrugated with grooves that have a widening towards their base.

8. The connection system (100, 300, 400, 600, 700) of claim 4, wherein the undulation of the inner surface (108, 402) comprises a thread.

9. The connection system (100, 300, 400, 600, 700) of claim 8, wherein the thread has a wider ridge than groove.

10. The connection system (100, 300, 400, 600, 700) of claim 8 or claim 9, wherein the thread has a groove with a widening towards its base.

11. The connection system (100, 300, 400, 600, 700) of claim 5 or claim 8, wherein a groove or grooves of the corrugation/thread has/have variable depth.

12. The connection system (100, 300, 400, 600, 700) of any one of the preceding claims, wherein the outer width of the pipe (102, 302) is between around 10 mm and 35 mm.

13. The connection system (100, 300, 400, 600, 700) of any one of the preceding claims, wherein the maximum width (D) of the cavity (107, 605) is around 5% to around 35% greater than the outer width (B, E) of the pipe (102,302).

14. The connection system (100, 300, 400, 600, 700) of any one of the preceding claims, wherein the maximum width (D) of the cavity (107, 605) is around 10% to around 15% greater than the outer width (B, E) of the pipe (102, 302). .

15. The connection system (100, 300, 400, 600, 700) of any one of the preceding claims, wherein the cavity (107, 605) defines a first opening (112) through which the pipe (102, 302) is received in the cavity (107, 605) and the connector (101, 401, 501, 601, 701) has a second opening (118) positioned so that it is in fluid communication with the end of the pipe (102, 302) when the pipe (102, 302) is received in the cavity (107, 605).

16. The connection system (100, 300, 400, 600, 700) of any one of the preceding claims, comprising means for connecting to another pipe (602) to form a conduit between the pipes (102, 302, 602).

17. The connection system (100, 300, 400, 600, 700) of any one of the preceding claims, comprising means for connecting to one or more other pipes (602) to form a junction between the pipes (102, 302, 602).

18. A method of connection using the connection system (100, 300, 400, 600, 700) of any one of the preceding claims.

## Patentansprüche

1. Verbindungssystem (100, 300, 400, 600, 700), mit einem Rohr (102, 302) und einem Verbinder (101, 401, 501, 601, 701) für die Verbindung mit dem Rohr (102, 302), wobei der Verbinder (100, 300, 400, 600, 700) einen Hohlraum (107, 605) für die Aufnahme eines Endes des Rohrs (102, 302) besitzt, wobei der Hohlraum (107, 605) eine Weite besitzt, die sich zwischen einem Minimum (C), das gleich oder kleiner als die äußere Breite (B, E) des Rohrs (102, 302) ist, um das Rohr (102, 302) in dem Hohlraum (107, 605) zu halten, und einem Maximum (D), das größer als die äußere Breite (B, E) des Rohrs (102, 302) ist, so dass sich das Rohr (102, 302) in dem Hohlraum (107, 605) ausdehnen kann, verändert, **dadurch gekennzeichnet, dass** das Rohr (102, 302) ein Material enthält, das sich bei Hydratation ausdehnt.

2. Verbindungssystem (100, 300, 400, 600, 700) nach Anspruch 1, wobei der Hohlraum (107, 605) im Wesentlichen zylindrisch ist.

3. Verbindungssystem (100, 300, 400, 600, 700) nach Anspruch 1 oder Anspruch 2, wobei sich die Weite des Hohlraums (107, 605) durch die innere Oberfläche (108, 402) des Hohlraums (107, 605), die eine oder mehrere Aussparungen (110, 403, 503, 604, 702) oder Vorsprünge (109, 404, 502, 504, 603) besitzt, verändert.

4. Verbindungssystem (100, 300, 400, 600, 700) nach Anspruch 1 oder Anspruch 2, wobei sich die Weite des Hohlraums (107, 605) durch die innere Oberfläche (108, 402) des Hohlraums (107, 605), die auf ihrer Länge wellig ist, verändert.

5. Verbindungssystem (100, 300, 400, 600, 700) nach Anspruch 4, wobei die Welligkeit der inneren Oberfläche (108, 402) eine Riffelung enthält.

6. Verbindungssystem (100, 300, 400, 600, 700) nach Anspruch 5, wobei die innere Oberfläche (108, 402) geriffelt ist, wobei die Stege breiter als die Nuten sind.

7. Verbindungssystem (100, 300, 400, 600, 700) nach Anspruch 4 oder Anspruch 5, wobei die innere Oberfläche (108, 402) geriffelt ist, wobei sich Nuten zu ihrer Basis hin erweitern.

8. Verbindungssystem (100, 300, 400, 600, 700) nach Anspruch 4, wobei die Welligkeit der inneren Oberfläche (108, 402) ein Gewinde aufweist.

9. Verbindungssystem (100, 300, 400, 600, 700) nach Anspruch 8, wobei das Gewinde einen Steg besitzt, der breiter als die Nut ist.

10. Verbindungssystem (100, 300, 400, 600, 700) nach Anspruch 8 oder Anspruch 9, wobei das Gewinde eine Nut besitzt, die sich zu ihrer Basis hin erweitert.

11. Verbindungssystem (100, 300, 400, 600, 700) nach Anspruch 5 oder Anspruch 8, wobei eine oder mehrere Nuten der Riffelung/des Gewindes eine variable Tiefe haben.

12. Verbindungssystem (100, 300, 400, 600, 700) nach einem der vorhergehenden Ansprüche, wobei die äußere Breite des Rohrs (102, 302) im Bereich von etwa 10 mm bis 35 mm liegt.

13. Verbindungssystem (100, 300, 400, 600, 700) nach einem der vorhergehenden Ansprüche, wobei die maximale Weite (D) des Hohlraums (107, 605) um etwa 5 % bis etwa 35 % größer ist als die äußere Breite (B, D) des Rohrs (102, 302).

14. Verbindungssystem (100, 300, 400, 600, 700) nach einem der vorhergehenden Ansprüche, wobei die maximale Weite (D) des Hohlraums (107, 605) um etwa 10 % bis etwa 15 % größer ist als die äußere Breite (B, D) des Rohrs (102, 302).

15. Verbindungssystem (100, 300, 400, 600, 700) nach einem der vorhergehenden Ansprüche, wobei der Hohlraum (107, 605) eine erste Öffnung (112) definiert, durch die das Rohr (102, 302) im Hohlraum (107, 605) aufgenommen ist, und der Verbinder (101, 401, 501, 601, 701) eine zweite Öffnung (118) besitzt, die so positioniert ist, dass sie mit dem Ende des Rohrs (102, 302) in einer Fluidkommunikation steht, wenn das Rohr (102, 302) in dem Hohlraum (107, 605) aufgenommen ist.

16. Verbindungssystem (100, 300, 400, 600, 700) nach einem der vorhergehenden Ansprüche, das Mittel zum Verbinden mit einem weiteren Rohr (602) enthält, um eine Leitung zwischen den Rohren (102, 302, 602) zu bilden.

17. Verbindungssystem (100, 300, 400, 600, 700) nach einem der vorhergehenden Ansprüche, das Mittel zum Verbinden mit einem oder mit mehreren anderen Rohren (602) enthält, um eine Verbindung zwischen den Rohren (102, 302, 602) zu bilden.

18. Verfahren zum Verbinden unter Verwendung des Verbindungssystems (100, 300, 400, 600, 700) nach einem der vorhergehenden Ansprüche.

## Revendications

1. Système de raccordement (100, 300, 400, 600, 700) comprenant un tuyau (102, 302) et un connecteur (101, 401, 501, 601, 701) pour le raccordement au tuyau (102, 302), dans lequel le connecteur (101, 401, 501, 601, 701) a une cavité (107, 605) pour recevoir une extrémité du tuyau (102, 302), la cavité (107, 605) ayant une largeur qui varie entre un minimum (C) qui est identique ou inférieur à la largeur externe (B, E) du tuyau (102, 302) afin de maintenir le tuyau (102, 302) à l'intérieur de la cavité (107, 605) et un maximum (D) qui est supérieur à la largeur externe (B, E) du tuyau (102, 302) de sorte que le tuyau (102, 302) peut s'expanser à l'intérieur de la cavité (107, 605) **caractérisé en ce que** le tuyau (102, 302) comprend un matériau qui s'expanse suite à l'hydratation.

2. Système de raccordement (100, 300, 400, 600, 700) selon la revendication 1, dans lequel la cavité (107, 605) est sensiblement cylindrique.

3. Système de raccordement (100, 300, 400, 600, 700) selon la revendication 1 ou la revendication 2, dans lequel la largeur de la cavité (107, 605) varie selon la surface interne (108, 402) de la cavité (107, 605) ayant un ou plusieurs évidements (110, 403, 503, 604, 702) ou saillies (109, 404, 502, 504, 603).

4. Système de raccordement (100, 300, 400, 600, 700) selon la revendication 1 ou la revendication 2, dans lequel la largeur de la cavité (107, 605) varie selon la surface interne (108, 402) de la cavité (107, 605) ondulant le long de sa longueur.

5. Système de raccordement (100, 300, 400, 600, 700) selon la revendication 4, dans lequel l'ondulation de la surface interne (108, 402) comprend une ondulation.

6. Système de raccordement (100, 300, 400, 600, 700) selon la revendication 5, dans lequel la surface interne (108, 402) est ondulée avec des crêtes plus larges que les rainures.

7. Système de raccordement (100, 300, 400, 600, 700) selon la revendication 4 ou la revendication 5, dans lequel la surface interne (108, 402) est ondulée avec des rainures qui ont un élargissement vers leur base.

8. Système de raccordement (100, 300, 400, 600, 700) selon la revendication 4, dans lequel l'ondulation de la surface interne (108, 402) comprend un filetage.

9. Système de raccordement (100, 300, 400, 600, 700) selon la revendication 8, dans lequel le filetage a une crête plus large que la rainure.

10. Système de raccordement (100, 300, 400, 600, 700) selon la revendication 8 ou la revendication 9, dans lequel le filetage a une rainure avec un élargissement vers sa base.

11. Système de raccordement (100, 300, 400, 600, 700) selon la revendication 5 ou la revendication 8, dans lequel une rainure ou des rainures de l'ondulation/filetage a/ont une profondeur variable.

12. Système de raccordement (100, 300, 400, 600, 700) selon l'une quelconque des revendications précédentes, dans lequel la largeur externe du tuyau (102, 302) est comprise entre environ 10 mm et 35 mm.

13. Système de raccordement (100, 300, 400, 600, 700) selon l'une quelconque des revendications précédentes, dans lequel la largeur maximum (D) de la cavité (107, 605) est de l'ordre d'environ 5 % à environ 35 % supérieure à la largeur externe (B, E) du tuyau (102, 302).

14. Système de raccordement (100, 300, 400, 600, 700) selon l'une quelconque des revendications précédentes, dans lequel la largeur maximum (D) de la cavité (107, 605) est de l'ordre d'environ 10 % à environ 15 % supérieure à la largeur externe (B, E) du tuyau (102, 302).

15. Système de raccordement (100, 300, 400, 600, 700) selon l'une quelconque des revendications précédentes, dans lequel la cavité (107, 605) définit une première ouverture (112) à travers laquelle le tuyau (102, 302) est reçu dans la cavité (107, 605) et le connecteur (101, 401, 501, 601, 701) a une deuxième ouverture (118) positionnée de sorte qu'il est en communication de fluide avec l'extrémité du tuyau (102, 302) lorsque le tuyau (102, 302) est reçu dans la cavité (107, 605).

16. Système de raccordement (100, 300, 400, 600, 700) selon l'une quelconque des revendications précédentes, comprenant des moyens pour le raccordement à un autre tuyau (602) afin de former un conduit entre les tuyaux (102, 302, 602).

17. Système de raccordement (100, 300, 400, 600, 700) selon l'une quelconque des revendications précédentes, comprenant des moyens pour se raccorder à un ou plusieurs autres tuyaux (602) afin de former une jonction entre les tuyaux (102, 302, 602).

18. Procédé de raccordement en utilisant le système de raccordement (100, 300, 400, 600, 700) selon l'une quelconque des revendications précédentes.
